# EUROPEAN PATENT APPLICATION

(11) **EP 4 044 102 A1**
(43) Date of publication of application: **17.08.2022**
(21) Application number: 20878404.1
(22) Date of filing: 12.10.2020
(51) Int. Cl.: G06Q 50/20, G06Q 50/10, G06Q 10/10

(54) **EDUCATION SYSTEM FOR PHARMACEUTICAL QUALITY BY DESIGN METHOD**

(30) Priority: 22.10.2019 KR 20190131026
(71) Applicant: LG Chem, Ltd., Seoul 07336 (KR)
(72) Inventor: KIM, Kang Hee, Daejeon 34122 (KR)
(74) Representative: Hoffmann Eitle
(86) International application number: PCT/KR2020/013886
(87) International publication number: WO 2021/080226

(57) **Abstract**

The present disclosure relates to a system for a training method for enhancing a quality by design of a medicine that is capable of effectively training a trainee on the training method for enhancing the quality by design by the medicine.

The system for a training method for enhancing a quality by design (QbD) of a medicine according to one aspect of the present disclosure may include a server that generates content and data for training a trainee on the method for enhancing the quality by design of the medicine, and performs evaluation and certification based on data provided from the trainee and a user terminal that receives data from the server through a network to provide the content and the data to the trainee, and transmits information entered by the trainee to the server, and the server may include a competency verification module that verifies a competency of the trainee who intends to complete the quality by design (QbD) 6 sigma training, a training module that provides training content at a plurality of levels and manages training with the competency of the trainee verified in the competency verification module, a task module that submits a task according to the training content of the training module, and collects task performance results to perform evaluation, and a certification module that performs the certification based on data collected by the task module.

## Description

### TECHNICAL FIELD

### Cross-reference to Related Applications

This application claims the benefit of Korean Patent Application No. 10-2019-0131026, filed on October 22, 2019, in the Korean Intellectual Property Office, the disclosure of which is incorporated herein in its entirety by reference.

### Technical Field

The present disclosure relates to a system for a training method for enhancing a quality by design of a medicine.

### BACKGROUND ART

With rapid aging population and increasing life expectancy due to economic growth worldwide, the pharmaceutical industry has continuously developed, and in order to provide enhanced quality of a medicine, a system for a quality by design (QbD) of a medicine is required to be introduced which is capable of integrating and managing a series of processes from product development to manufacturing based on pharmaceutical good manufacturing practice (GMP).

In addition, an understanding of the systematic and scientific manufacturing process originating from the pharmaceutical manufacturing and quality control system is required, and a study on the application of 6 sigma statistical methodology to implement the quality by design of the medicine for quality control is also required.

If the drug development and production technology of the domestic pharmaceutical industry does not meet international demands, no further growth may be expected.

The quality of design (QbD) of the medicine was proposed by Dr. Joseph M. Juran in 1992. According to the proposal, it was argued that quality may be secured through plan or design, not through evaluation (test) or management (control).

The International Council for Harmonization of Technical Requirements for Pharmaceuticals for Human Use (ICH), established in 1990, led by government regulatory agencies and pharmaceutical associations in the United States, the European Union (EU), and Japan has introduced the concept of the quality by design (QbD) in the quality guideline.

ICH Q8 contains the concept of pharmaceutical development, Q9 contains the concept of quality risk management, Q10 contains the concept of a pharmaceutical quality system, and Q11 contains the concept of development and manufacturing of drug substances.

Due to different country-specific requirements for drug approval, pharmaceutical companies incur unnecessary costs and periods in the process of approval, resulting in increased prices and delays in supply of drugs, which is disadvantageous to patients. The ICH has been established to solve the mentioned problems.

The Republic of Korea became the 6th member country in November 2016. The ICH is primarily responsible for international coordination of requirements regarding drug product approval.

ICH Q8(R2) defines the quality by design (QbD) as a systematic approach to drug development that begins with predefined objectives and emphasizes product and process understanding and a process control based on sound science and quality risk management.

In order to meet the demands of the international community and develop into a global company, pharmaceutical companies and new drug development companies need to systematically establish a training system for the quality by design of the medicine and the quality control and train personnel in charge.

(Non-Patent Literature 1) Non-Patent Literature: http://www.nifds.go.kr/brd/m_15/down.do?brd_id=167&seq=12607& data_tp=A&file_seq=1.

### DISCLOSURE OF THE INVENTION

### TECHNICAL PROBLEM

Embodiments of the present disclosure have been developed to solve the above problems and are to provide a system for a training method for enhancing a quality by design of a medicine, which is capable of effectively training a trainee on the training method for enhancing the quality by design of the medicine.

### TECHNICAL SOLUTION

According to one aspect of the present disclosure, a system for a training method for enhancing a quality by design (QbD) of the medicine may include: a server that generates content and data for training a trainee on the method for enhancing the quality by design of the medicine, and performs evaluation and certification based on data provided from the trainee; and a user terminal that receives data from the server through a network to provide the content and the data to the trainee, and transmits information entered by the trainee to the server, and the server may include a competency verification module that verifies a competency of the trainee who intends to complete quality by design (QbD) 6 sigma training, a training module that provides training content at a plurality of levels and manages training with the competency of the trainee verified in the competency verification module, a task module that submits a task according to the training content of the training module, and collects task performance results to perform evaluation, and a certification module that performs the certification based on data collected by the task module.

The training module, the task module, and the certification module may perform the training, the task evaluation, and the certification, respectively, by dividing the levels into a green belt level, a black belt level, a master black belt level, and a big data master black belt based on a level of a user.

The training module may include a training application unit, a training attendance unit, a training progress unit, and a training result unit.

The task module may include a task registration unit, a task performance unit, and a task evaluation unit.

The task performance unit may include a task definition section, a task measurement section, a task analysis section, a task improvement section, and a task management unit, and the task evaluation unit includes a task definition evaluation section, a task measurement evaluation section, a task analysis evaluation section, a task improvement evaluation section, and a task management evaluation section.

The certification module may include an oral evaluation unit and a final evaluation unit.

The certification module may suspend the certification when it is determined that an evaluation result of the final evaluation unit is equal to or less than a preset score.

### ADVANTAGEOUS EFFECTS

With the system for training a method for enhancing a quality by design of a medicine according to embodiments of the present disclosure, it is possible to effectively train the trainee on the training method for enhancing the quality by design of the medicine.

### BRIEF DESCRIPTION OF THE DRAWINGS

FIG. 1 is a conceptual diagram illustrating a configuration of a system for a training method for enhancing a quality by design of a medicine according to an embodiment of the present disclosure.
FIG. 2 is a conceptual diagram illustrating a configuration of a server and a user terminal of FIG. 1.
FIG. 3 is a block diagram illustrating an example of a configuration of a processing device of the server of FIG. 1.
FIG. 4 is a flowchart illustrating an example of a green belt (GB) certification process driven in the processing device of the server of FIG. 1.
FIG. 5 is a flowchart illustrating an example of a black belt (BB) certification process driven in the processing device of the server of FIG. 1.
FIG. 6 is a flowchart illustrating an example of a master black belt (MBB) certification process driven in the processing device of the server of FIG. 1.
FIG. 7 is a flowchart illustrating an example of the MBB certification process driven in the processing device of the server of FIG. 1.

### MODE FOR CARRYING OUT THE INVENTION

Various embodiments will now be described with reference to the drawings, and like reference numbers are used to indicate like elements throughout the drawings. In the present specification, various descriptions are presented to provide an understanding of the present disclosure. However, it is clear that these embodiments may be implemented without such detailed description. In other examples, well-known structures and devices are provided in a block diagram form to facilitate the description of the embodiments.

The terms "component", "module", "system" and the like as used herein refer to computer-related entities, hardware, firmware, software, a combination of software and hardware, or execution of software. For example, a component may be, but is not limited to, a process executed on a processor, a processor, an object, an execution thread, a program, and/or a computer. For example, both an application running on a computing device and the computing device may be components. One or more components may reside within a processor and/or an execution thread, and a component may be localized within one computer, or may be distributed between two or more computers. In addition, these components may be executed from a variety of computer-readable media having various data structures stored therein. Components may be communicated through local and/or remote processes, for example, with signals with one or more data packets (e.g., data from one component interacting with another component in a local system and a distributed system, and/or data through signals over a network such as the Internet and another).

In addition, the terms "comprise" and/or "comprising" mean that the feature and/or element is present, but it is to be understood that the presence or addition of one or more other features, elements and/or groups thereof is not excluded. In addition, the articles "a" and "an" as used in this application and the appended claims should generally be construed to mean "one or more" unless otherwise specified or clear from the context to be directed to a singular form.

The description of the presented embodiments is provided to enable those skilled in the art to use or practice the present disclosure. Various modifications to these embodiments will be apparent to those skilled in the art, and the general principles defined herein could be applied to other embodiments without departing from the scope of the present disclosure. Thus, the present disclosure is not to be limited to the embodiments presented herein, but is to be accorded the widest scope consistent with the principles and novel features presented herein.

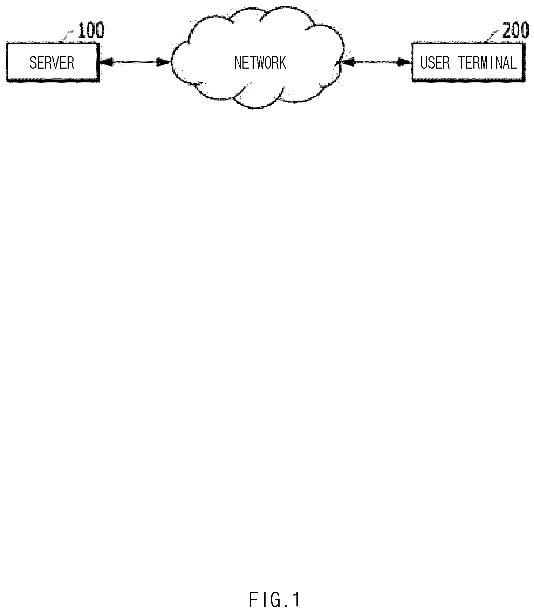

FIG. 1 is a conceptual diagram illustrating a configuration of a system for a training method for enhancing a quality by design of a medicine according to an embodiment of the present disclosure.

Referring to FIG. 1, the system for a training method for enhancing a quality by design of a medicine according to an embodiment of the present disclosure may include a server 100 storing contents for training and processing data necessary for training and providing the processed data, and a user terminal 200 capable of receiving the content or data from the server 100 and providing it to a trainee. The server 100 and the user terminal 200 may communicate through a wireless and/or wired interconnection through a network.

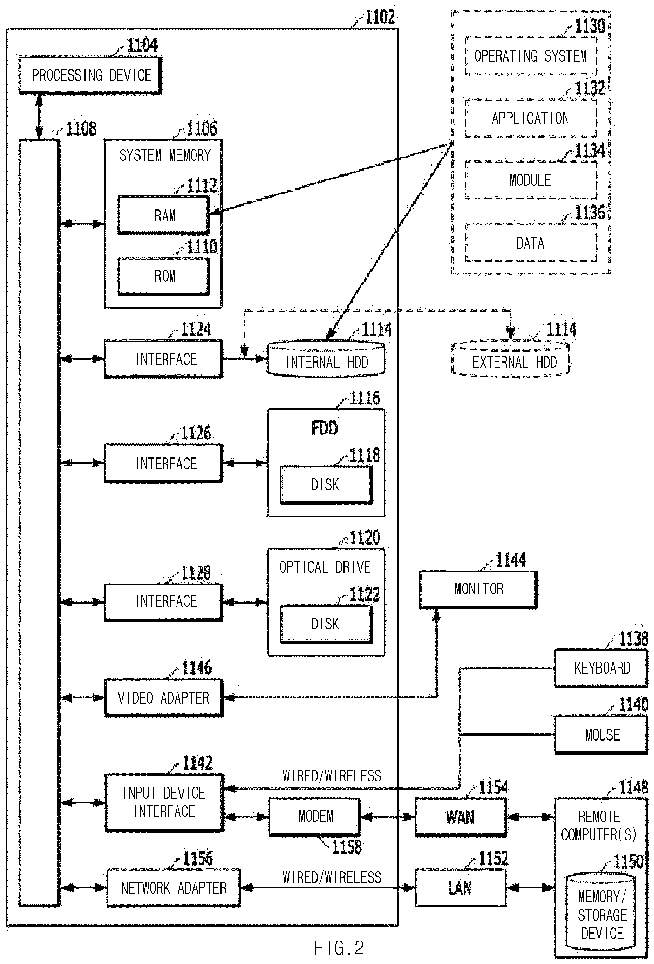

FIG. 2 is a conceptual diagram illustrating a configuration of the server and the user terminal of FIG. 1.

The configuration as illustrated in FIG. 2 may be applied to the server 100 and may also be applied to the user terminal 200. In the present embodiment, the configuration of FIG. 2 is described as an example of the configuration of the server 100, but the spirit of the present disclosure is not limited thereto.

The present disclosure has generally been described above with respect to computer-executable instructions that are executable on one or more computers; however, it will be appreciated by those skilled in the art that the present disclosure may be implemented in combination with other program modules and/or as a combination of hardware and software.

In general, modules herein include a routine, a procedure, a program, a component, a data structure, or the like that performs particular tasks or implements particular abstract data types. In addition, it will be appreciated by those skilled in the art that the method of the present disclosure may be implemented with other computer system configurations including a personal computer, a handheld computing device, a microprocessor-based or programmable household appliance, and the like (each of which may operate in connection with one or more associated devices), as well as a single-processor or multiprocessor computer system, a minicomputer, a mainframe computer.

The described embodiments of the present disclosure may also be implemented in a distributed computing environment where certain tasks are performed by remote processing devices that are connected through a communication network. In the distributed computing environment, program modules may be located in both local and remote memory storage devices.

The computer typically includes a variety of computer-readable media. Computer-accessible media may include any computer-readable media, including volatile and non-volatile media, transitory and non-transitory media, and removable and non-removable media. By way of non-limiting example, computer-readable media may include computer-readable storage media and computer-readable transmission media.

The computer-readable storage media include volatile and non-volatile media, transitory and non-transitory media, removable and non-removable media implemented in any method or technology for storing information such as computer-readable instructions, data structures, program modules or other data. The computer-readable storage media include, but are not limited to, random access memory (RAM), read-only memory (ROM), electronically erasable PROM (EEPROM), flash memory or other memory technology, CD-ROM, digital video disk (DVD) or other optical disk storage, magnetic cassette, magnetic tape, magnetic disk storage or other magnetic storage, or any other medium that may be accessed by a computer and used to store desired information.

The computer-readable transmission media typically implement computer-readable instructions, data structures, program modules, or other data in a modulated data signal such as a carrier wave or other transport mechanism and include all information delivery media. The term "modulated data signal" refers to a signal of which one or more of the characteristics is set or changed to encode information in the signal. By way of non-limiting example, the computer-readable transmission media include wired media such as a wired network or direct-wired connection, and wireless media such as acoustic, RF, infrared, and other wireless media. Combinations of any of the above-described media are also intended to be included within the scope of computer-readable transmission media.

Referring to FIG. 2, an exemplary environment 1100 including a computer 1102 is illustrated that implements various aspects of the present disclosure, where the computer 1102 includes a processing device 1104, a system memory 1106, and a system bus 1108. The system bus 1108 connects system components, including but not limited to, the system memory 1106, to the processing device 1104. The processing device 1104 may be any of a variety of commercially available processors. Dual processors and other multiprocessor architectures may also be used as the processing device 1104.

The system bus 1108 may be any of several types of bus structures that may be additionally interconnected with a memory bus, a peripheral bus, and a local bus using any of a variety of commercial bus architectures. The system memory 1106 includes a ROM 1110 and a RAM 1112. The basic input/output system (BIOS) is stored in a nonvolatile memory 1110 such as ROM, EPROM, EEPROM, or the like, and the BIOS contains basic routines that assist in transferring between components in a computer 1102 such as during startup. The RAM 1112 may also include a high-speed RAM such as a static RAM for caching data.

The computer 1102 also includes an internal hard disk drive (HDD) 1114 (e.g., EIDE or SATA) (the internal hard disk drive 1114 may also be configured for external use within a suitable chassis (not illustrated)), a magnetic floppy disk drive (FDD) 1116 (e.g., to read from or write to a removable diskette 1118), and an optical disk drive 1120 (e.g., to read from or write to a CD -ROM disk 1122 or to read from or write to other high-capacity optical media such as digital versatile disk (DVD)). The hard disk drive 1114, the magnetic disk drive 1116, and the optical disk drive 1120 may be each connected to the system bus 1108 by a hard disk drive interface 1124, a magnetic disk drive interface 1126 and an optical drive interface 1128. The interface 1124 for implementing an external drive includes, for example, at least one or both of the universal serial bus (USB) and the IEEE 1394 interface technologies.

The drives and computer-readable media associated therewith provide non-volatile storage of data, data structures, computer-executable instructions, and the like. For the computer 1102, the drives and media accommodate the storage of any data in a suitable digital format. Although the description of the computer-readable storage medium above has been made with respect to the removable optical medium such as the HDD, the removable magnetic disk, and the CD or DVD, it will be appreciated by those skilled in the art that other types of computer-readable storage media, such as zip drives, magnetic cassettes, flash memory cards, cartridges, or the like may also be used in the exemplary operating environment and any such media may contain computer-executable instructions for performing methods of the present disclosure.

A number of program modules, including an operating system 1130, one or more application programs 1132, other program modules 1134, and program data 1136, may be stored in the drive and the RAM 1112. All or part of the operating system, applications, modules, and/or data may also be cached in the RAM 1112. It will be appreciated that the present disclosure may be implemented in a number of commercially available operating systems or combinations of operating systems.

The user may enter instructions and information to the computer 1102 through one or more wired/wireless input devices, for example, pointing devices such as a keyboard 1138 and a mouse 1140. Other input devices (not illustrated) may include a microphone, IR remote control, joystick, game pad, stylus pen, touch screen, and the like. These and other input devices are often connected to the processing device 1104 through an input device interface 1142 that is connected to the system bus 1108, but may be connected through other interfaces such as a parallel port, an IEEE 1394 serial port, a game port, a USB port, or an IR interface.

A monitor 1144 or another type of display device is also connected to the system bus 1108 through an interface such as a video adapter 1146. In addition to the monitor 1144, the computer generally includes other peripheral output devices (not illustrated) such as speakers, printers, and the like.

The computer 1102 may operate in a networked environment by using logical connections to one or more remote computers, such as remote computer(s) 1148, through wired and/or wireless communication. The remote computer(s) 1148 may be a workstation, a server computer, a router, a personal computer, a portable computer, a microprocessor-based entertainment device, a peer device, or other common network nodes, and generally include (s) many or all of the components described for the computer 1102, but for simplicity, only memory storage device 1150 is illustrated. The logical connections illustrated include wired/wireless connections to a local area network (LAN) 1152 and/or to a larger network, for example, a wide area network (WAN) 1154. Such LAN and WAN networking environments are common in offices and companies, and facilitate an enterprise-wide computer network such as an intranet, all of which may be connected to a worldwide computer network, for example, the Internet.

When used in a LAN networking environment, the computer 1102 is connected to the local network 1152 through a wired and/or wireless communication network interface or an adapter 1156. The adapter 1156 may facilitate wired or wireless communication to the LAN 1152, which also includes a wireless access point installed therein to communicate with the wireless adapter 1156. When used in a WAN networking environment, the computer 1102 may include a modem 1158, or other means of establishing communications over the WAN 1154 by connecting to a communication server on the WAN 1154, or over the Internet. The modem 1158, which may be an internal or external and a wired or wireless device, is connected to the system bus 1108 through a serial port interface 1142. In the networked environment, program modules described with respect to the computer 1102 or portions thereof may be stored in the remote memory/storage device 1150. It will be appreciated that the network connections illustrated are exemplary and other means may be used for establishing communication links between computers.

The computer 1102 operates to communicate with any wireless device or entity to operate in wireless communication, for example, any equipment or place, or phone associated with a printer, a scanner, a desktop and/or portable computer, a portable data assistant (PDA), a communication satellite, a wireless detectable tag. This includes at least wireless fidelity (Wi-Fi) and Bluetooth wireless technologies. Thus, the communication may be a predefined structure as in an existing network or may simply be ad hoc communication between at least two devices.

Wi-Fi makes it possible to connect to the Internet or the like without wires. Wi-Fi is a wireless technology, such as a cell phone, that allows, a device, for example, a computer, to transmit and receive data indoors and outdoors, that is, anywhere within the coverage area of a base station. Wi-Fi networks use a wireless technology called IEEE 802.11 (a, b, g, and others) to provide a secure, reliable and high-speed wireless connection. Wi-Fi may be used to connect computers to each other, to the Internet and to a wired network (using IEEE 802.3 or Ethernet). Wi-Fi networks may operate in unlicensed 2.4 and 5 GHz radio bands, for example, at 11 Mbps (802.11a) or 54 Mbps (802.11b) data rates, or in products that include both bands (dual band).

Hereinafter, the system for a training method for enhancing a quality by design of a medicine according to an embodiment of the present disclosure will be described in detail.

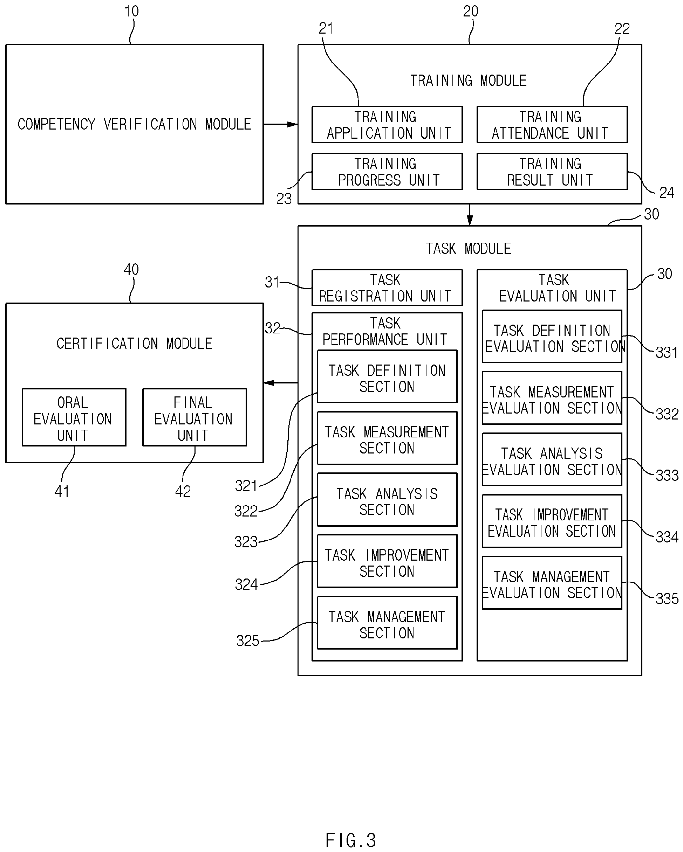

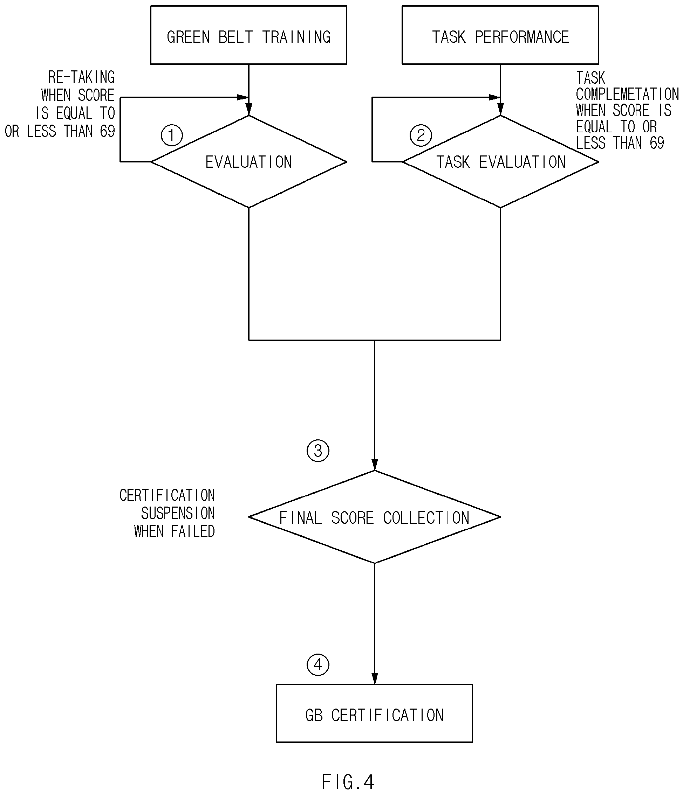

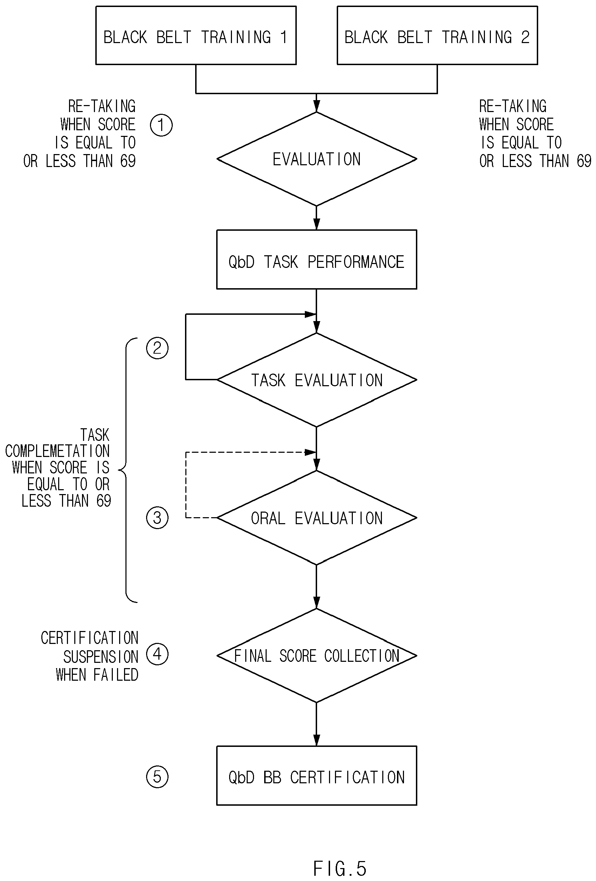

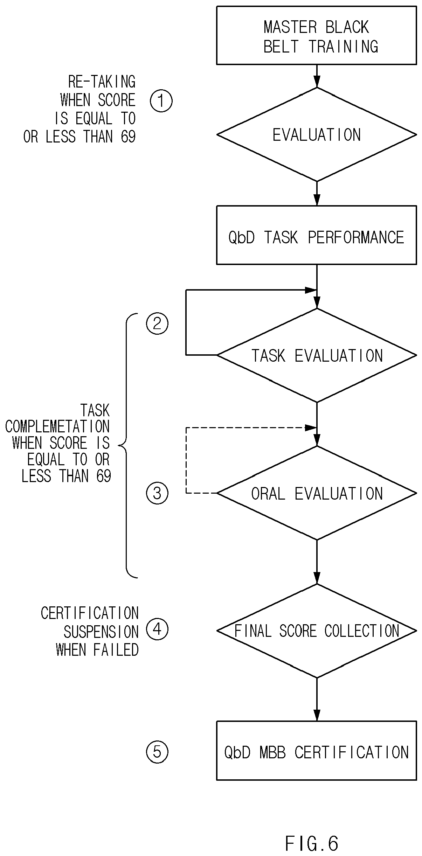

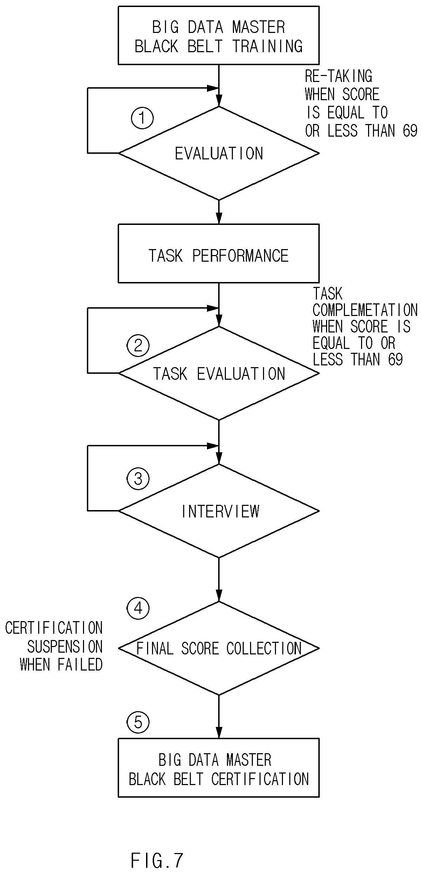

FIG. 3 is a block diagram illustrating an example of a configuration of a processing device of the server of FIG. 1, FIG. 4 is a flowchart illustrating an example of a green belt (GB) certification process driven in the processing device of the server of FIG. 1, FIG. 5 is a flowchart illustrating an example of a black belt (BB) certification process driven in the processing device of the server of FIG. 1, FIG. 6 is a flowchart illustrating an example of a master black belt (MBB) certification process driven in the processing device of the server of FIG. 1, and FIG. 7 is a flowchart illustrating an example of the MBB certification process driven in the processing device of the server of FIG. 1.

Referring to FIGS. 3 to 7, the system for a training method for enhancing a quality by design of a medicine (hereinafter referred to as the 'system') is to be understood as an IT system for computerizing the entire process through competency verification -> training -> tasks -> certification, and as described above, training may be performed by the interaction between the server 100 and the user terminal 200.

In the following description, an example will be described in which the main processing of the system is performed by a module functionally and/or physically provided in the processing device 1104 of the server 100. In addition, an example will be described in which functions and operations that interface with a user are performed by the user terminal 200. The spirit of the present disclosure is not limited thereto, and in order to achieve the object of the present disclosure, the server 100 and the user terminal 200 may perform respective functions and operations separately at a level that may be easily understood by those skilled in the art.

The processing module 1104 may include a competency verification module 10, a training module 20, a task module 30, and a certification module 40.

The competency verification module 10 may include a function of allowing individuals in need of training to access and diagnose their level, and the individuals may enter a work history, a task performance period, a holding belt, statistical analysis capability, a job, a position, and a department. The holding belts are indicated in the system, where a belt awarded by a company or an organization other than the host company, if any, is entered, and the required training is classified according to job and department.

In the following description, "belt" may be understood as the level of certification of the trainee.

A trainee with no belt is eligible for green belt (GB) as level 1. The main point is that the cost and time spent on operation is to be minimized by performing recommendation according to the job and department; that is, by recommending the good manufacturing practice (GMP) GB to personnel in the production and quality department, and recommending the quality by design (QbD) GB to personnel in the R&D department.

The most important variable in the competency verification module 10 is the holding belt; a trainee with no holding belt is informed that he or she is eligible to apply for the GB, a trainee with the GB for the BB, a trainee with the BB for the MBB, and a trainee with the MBB for the big data MBB. Only the GB and BB are classified into the GMP and QbD to separate personnel in production/quality and personnel in R&D for training.

The system shows the belts to be possessed according to the position and work history, and makes the trainees aware of them. The GB is shown to employees, the BB is shown to assistant managers and managers, and the MBB is shown to deputy managers and above.

When the competency verification is completed, it goes to the training module 20. The training module 20 may include a training application unit 21, a training attendance unit 22, a training progress unit 23, and a training result unit 24. All modules are operated by the system.

The training application unit 21 indicates a training schedule that may be taken and allows the trainees to apply for the desired training session. Training information indicates the schedule and the period, the location, and the number of trainees that have currently applied, and the confirmed number of trainees. When the training information is confirmed, the training timetable, instructor information, and the requirements to complete a preparation training may be confirmed.

When the registration for a course is completed with the system, individuals are notified of the course details through the system APP, and are informed of a lecture hall and lecture time. Trainee information allows the instructor and the person in charge of training management to confirm the entered information for their frequent confirmation. In the system APP, access may be made separately for trainees, instructors, and the person in charge of training management.

The training attendance unit 22 makes it possible to input the training center entrance time by entering the QR code of the system APP. The QR code is placed in the lecture hall. The entrance time and exit time are managed, and it is confirmed that the training time is between checked times, and thus it is determined whether or not the training is completed. It takes 8 hours a day for GB training, total 24 hours in 3 days. When the trainees take more than 20 hours, equivalent to 80%, a completion requirement 1 is satisfied, and when trainees score 70 points or more in theoretical evaluation after completing the training, the trainees are considered as training completion.

The training progress unit 23 is a process of photographing tasks or practice progress during training with a mobile phone camera, accessing the system, and submitting the results of the tasks. It performs the intermediate evaluation function of checking whether the practice has been faithfully performed, the practice is able to be used correctly, and the training contents is sufficiently understood. The trainees, the instructor, and the person in charge of training management may confirm the tasks submitted by each trainee through the system APP, and the instructor may comment on the submitted tasks to the trainees through the system.

The training progress unit 23 operates at six levels as a GMP GB, QbD GB, GMP BB, QbD BB, MBB, and big data MBB. The GMP GB is conducted with textbooks for training, including 6 sigma and GMP general theory and logic tree, normal distribution and standard normal distribution among continuous probability distributions, basic measurement system analysis and process capability analysis, mean analysis, ratio analysis, variance analysis, and correlation analysis in hypothesis test estimation, and graph analysis including histogram scatterplot, and box plot.

The QbD GB focuses on 6 sigma, the necessity and concept of QbD, and quality target product profile (QTPP) and critical quality attribute (CQA), and is conducted with textbooks for training, including normal distribution and standard normal distribution among continuous probability distributions, basic measurement system analysis and process capability analysis, mean analysis, ratio analysis, variance analysis, correlation analysis, and simple linear regression analysis in hypothesis test estimation, graph analysis including histogram scatterplot, and box plot, and full factorial design (design of experiment).

The GMP BB is an intensified process of the contents of the GMP GB, includes an equivalence test, a stability test regression analysis, and a multiple linear regression analysis in the hypothesis test and estimation part, and is conducted with textbooks for training including part of the design of experiment and analysis of the partial factorial design, the full factorial design, and the central composite method, and part of the statistical process control necessary for a quality control strategy.

The QbD BB is conducted with textbooks for training based on statistical techniques capable of understanding and performing a critical process parameter (CPP), DS, and CS, including the basic contents of QbD GB. It is conducted with textbooks including the equivalence test, the stability test, the paired test, the correlation analysis, the simple linear regression analysis, the multiple linear regression analysis, the partial design, the full design, and the central composite and the mixture method, and part of the statistical process control necessary for the quality control strategy.

The MBB is an integrated course of the GMP and the QbD GB/BB courses, and is conducted with textbooks including all the contents and training contents for instructors who are able to teach and lecture all the contents.

A big data MBB curriculum is conducted with textbooks including an analytical method for finding meaning and values with all structured and unstructured data from clinical trial results and research and development process and a data analysis method required for drug development by using a supervised training unsupervised training artificial intelligence techniques.

The big data MBB is conducted with textbooks including the contents of the linear regression analysis, the nonlinear regression analysis, the supervised training, the unsupervised training, cluster analysis, and association analysis, which are capable of performing analysis to establish management strategies and sales strategies by using data of National Health Insurance Service and data of Health Insurance Review & Assessment Service.

The training result unit 240 performs a function of classifying the results of training into PASS or FAIL by summing test scores and attendance scores. The test is conducted in the system, and the individual is notified of the score as a computer based test (CBT) immediately after the test is completed.

The test is operated differently for each level.

The GMP GB evaluates the degree to which the trainees are well informed of the method of statistically managing the designated CQA, CPP, or critical material attribute (CMA) including items on a test method validation and evaluation of stability of drugs, which requires statistical analysis, among the contents of the manufacturing and production of excellent drugs related to the GMP.

The QbD GB evaluates whether the trainees have the method of selecting the QTPP and CQA in a quantitative way and the capacity of selecting the CPP or CMA in a statistical way, including the contents of the quality of design of the medicine.

The BB training consists of 40 hours in 5 days. It consists of a three-day training and a two-day training. The trainees have to take more than 32 hours, which is 80% of the class, and if a trainee misses 8 hours in one day, the completion requirement is not satisfied even if the trainee takes 32 hours in 4 days. If a trainee does not attend for more than 4 hours in one day, he or she will be treated as a non-completion and be notified of re-taking.

The GMP BB theoretically evaluates whether the test method validation and the measurement system analysis, a qualification evaluation, a stability evaluation, a process capability analysis, a control chart, and CPP acceptance criteria may be performed in a statistical way, among the overall contents of the GMP on the manufacturing and production of excellent drugs, and also conducts practical tests to see whether they may be performed with statistical packages, thereby achieving a comprehensive evaluation. The practical evaluation is quantitatively performed by the evaluator, and entered in the system within 5 days, and individuals are notified of the entered evaluation.

The QbD BB includes contents for allowing the trainees to understand the procedures and methods for all processes of the quality by design, QTPP -> CQA -> CPP -> DS -> CS, particularly training the trainees to select the CQA, CPP and CMA by using statistical techniques, and allowing the trainees to select a method of establishing a design space of the CPP or CMA by using the design of experiment (DOE) . In the QbD BB process, the design space of all drugs, including partial factorial design, full factorial design, response surface analysis, and mixture experiment may be allowed to be set statistically. It also includes training about the process capability analysis, measurement system analysis, and statistical process control required to establish management strategies. The competency is evaluated by confirming the degree of awareness with all these contents through theoretical evaluation, and by confirming whether or not it may be actually performed through practical evaluation. The practical evaluation is quantitatively performed by the evaluator, and entered the evaluation into the system within 5 days, and individuals are notified of the entered evaluation.

The MBB performs training without distinguishing between GMP and QbD, and is required to take 100 hours of training, including 80 hours of theoretical training and 20 hours of instructor training. The MBB may be applied by a certifier of the GMP BB or QbD BB. The MBB includes training including overall contents of the GMP and the measurement system analysis, test method validation, qualification evaluation and stability evaluation, the process capability analysis, and statistical process control, which requires statistical analysis, for allowing the trainees to select the hypothesis test estimation for statically selecting the overall contents of the QbD and the CQA and the CPP CMA, the graphic analysis and the design space of the CPP or CMA by using the design of experiment (DOE) and allowing the trainees to establish management strategies for the CQA or CPP CMA.

The big data MBB includes training for allowing people with MBB qualifications to use basic big data analysis and graphs and use graph analysis and big data analysis technology for big data nonlinear model for tasks, and allowing the people to have the capability of leading big data tasks, give lectures on big data analysis, and build an analysis environment.

The training module 20 conducts the GB, BB, MBB, and big data MBB training according to the level of competency for the trainees, evaluates the trainees, and informs the trainees of the result through the APP. When the trainee applies for training in the competency verification module 10, the training suitable for the schedule and time zone desired by the trainee is provided. Subsequently, guidance and textbook contents for the trainees are provided. Here, the trainees have to apply for the theoretical and practical evaluation according to the prescribed regulations and acquire 70 points or more for the GB and 60 points or more for the BB or above for training completion.

In the training result unit 24, the instructor enters the attendance and test scores into the system as individual scores each trainee. The person in charge of training management may check the scores and choose whether to open the scores to the trainees. Upon opening, each trainee may access the system APP and may be notified whether he or she has completed the training by PASS or FAIL. All histories are recorded in the system.

The task module 30 consists of a task registration unit 31, a task performance unit 32, and a task evaluation unit 33.

The task registration unit 33 registers GB tasks regardless of whether or not training has been completed, and registers tasks of the BB or above by checking whether the training has been completed. That is, it is determined whether or not the tasks are registered based on the information on the result of training completion of the training module 20.

The trainee may upload the document that has performed the task to the system through the task performance unit 32 and may receive evaluation and guidance for each step. The task performance unit is operated differently for each belt level.

Tasks of the BB or above are divided into a task definition section 321, a task measurement section 322, a task analysis section 323, a task improvement section 324, and a task management section 325. It all consists of five steps.

The task definition section 321 uploads, to the system, a document describing the background of the task selection as a document including the importance and size of the task and the suitability of the selection of the improvement target. The flow, TPP -> QTPP -> CQA, is logically appropriate, and the document is selected through risk assessment and uploaded to the system selects through risk assessment and uploads so that the evaluator may check it.

The task measurement section 322 properly performs analysis of the measurement system and establishment of the improvement direction and improves the measurement system, if necessary. The measurement system to measure the CQA is analyzed by using statistical analysis techniques. The analysis may be documented and uploaded to the system so that the evaluator may check it.

The task analysis section 323 performs logical and objective selection of potential CPP or potential CMA -> causal factors. The CPP or CMA may be logically and reasonably selected in a statistical way and be documented and uploaded to the system so that the evaluator may check it.

The task improvement section 324 selects the design space well in a statistical way and performs an appropriate design of experiment. Then, the derived design space is verified through the Monte Carlo simulation or a confirmation test. The analysis of the side effect is documented by performing multiple reaction optimization or multiple mixture optimization while improving through the task, and uploaded to the system so that the evaluator may check it.

The task management section 325 documents the results that have been appropriately established by management strategies of CQA, CPP, and CMA, and uploads them to the system so that the evaluator may check them.

The task evaluation unit 33 includes a task definition evaluation section 331, a task measurement evaluation section 332, a task analysis evaluation section 333, a task improvement evaluation section 334, a task management evaluation section 335, and a point adding section. All GB, BB, and MBB tasks are evaluated on the same basis, and the levels of the tasks are not separately determined.

The task definition evaluation section 331 comprehensively evaluates the importance and size of the task, the suitability of the selection of the improvement target, and the fidelity of the task performance, and gives a perfect score of 15 points. When the improvement target is selected, it is determined whether the flow, TPP -> QTPP -> CQA, is logically appropriate, and the selection is performed through risk assessment.

The task measurement evaluation section 332 focuses on whether analysis of the measurement system and establishment of the improvement direction are appropriately performed, and gives additional points if the measurement system is improved. The task measurement evaluation section 332 mainly determines whether the analysis of the measurement system to measure the CQA is well performed by using statistical analysis techniques.

The task analysis evaluation module 333 mainly determines whether the selection of potential CPP or potential CMA -> causal factors is logically and objectively well selected, and whether the selection of the CPP or CMA is logically and reasonably selected by a statistical method. When the analysis is done in the wrong way, a deduction is given.

The task improvement evaluation module 334 determines whether the design space is well selected by the statistical method and whether an appropriate design of experiment is performed. Then, the task improvement evaluation section 334 checks whether the derived design space is verified through the Monte Carlo simulation or a confirmation test. Additional points are given if the analysis of the side effect is obtained by performing the multiple reaction optimization or the multiple mixture optimization while improving through the task.

The task management evaluation module 335 determines whether the management strategies of the CQA, the CPP, and the CMA are appropriately established and whether the results are documented and reflected to be periodically monitored through a statistical management system. All tasks may be given additional points if the performance amount is equal to or more than 100 million and if selected as best practice.

The result of the task evaluation module 30 is recorded as a history in the system for each step, and the task performer receives the mid-term evaluation and feedback of the task evaluator from the system when each step is completed. The evaluator may choose to approve or reject, and may give a simple comment to the APP upon approving or rejecting. All histories are recorded in the system.

The certification module 40 is divided into an oral evaluation unit 41 and a final evaluation unit 42.

The oral evaluation unit 41 targets those who are to perform tasks BB or above, and in the GB, there is no a separate oral evaluation. The oral evaluation unit 41 is conducted in a 1:1 interview method between the evaluator and the test taker, and records the contents of questions, answers, and evaluation of the evaluator and leaves the contents on record in the system. Access to the record is allowed only for the evaluator and the course operator, but may the test taker may access to it upon request.

The final evaluation unit 42 is a module for certifying personnel who have performed the oral evaluation unit 41 or who have passed both the training module 20 and the task module. The department head or executive in charge is responsible for the certification for the GB, the head of the business division is responsible for the certification for the BB, and the CEO is responsible for the final certification for MBB and above. A certificate is issued for each type and the serial number is recorded in the system. The certification date and certification number are recorded. The individual is allowed to print out the certificate, and the initial issuance is made by the secretariat, the department where the evaluator is located.

The system is related to a system for a training method for enhancing a quality of design of a medicine, and may be understood as a system for training across the pharmaceutical industry, including GMP as well as QbD, which may systematically train, nurture, and manage all processes from designing excellent medicines to manufacturing and producing excellent medicines.

It will be understood by those skilled in the art of the present disclosure that various exemplary logical blocks, modules, processors, means, circuits, and algorithm steps described in connection with the embodiments disclosed herein may be implemented by electronic hardware, various forms of program or design code (for convenience, referred to herein as "software"), or a combination thereof. In order to clearly illustrate this interchangeability of hardware and software, various illustrative components, blocks, modules, circuits, and steps have been described above generally in terms of their functionality. Whether such functionality is implemented as hardware or software depends on a specific application and design constraints imposed on the overall system. Those skilled in the art of the present disclosure may implement the functions described in various ways for each specific application, but such implementation decisions should not be interpreted as causing a departure from the scope of the present disclosure.

The various embodiments presented herein may be implemented in a method, a device, or an article of manufacture using standard programming and/or engineering techniques. The term "article of manufacture" includes a computer program, carrier, or media accessible from any computer-readable device. For example, computer-readable storage media include, but are not limited to, magnetic storage devices (e.g., hard disks, floppy disks, magnetic strips, etc.), optical disks (e.g., compact disk (CD), DVD, or the like), smart cards, and flash memory devices (e.g., electrically erasable PROM (EEPROM), cards, sticks, key drives, or the like). The term "machine-readable medium" includes, but is not limited to, wireless channels and various other media capable of storing, holding, and/or transmitting instruction(s) and/or data.

It is to be understood that a specific order or hierarchy of steps in the presented processes is an example of exemplary approaches. It is to be understood that based on the design priorities, a specific order or hierarchy of steps in the presented processes may be rearranged within the scope of the disclosure. The accompanying method claims present elements of the various steps in a sample order, and are not meant to be limited to the specific order or hierarchy presented.

The description of the presented embodiments is provided to enable those skilled in the art to use or practice the present disclosure. Various modifications to these embodiments will be apparent to those skilled in the art, and the general principles defined herein could be applied to other embodiments without departing from the scope of the present disclosure. Thus, the present disclosure is not to be limited to the embodiments presented herein, but is to be accorded the widest scope consistent with the principles and novel features presented herein.

## Claims

1. A system for a training method for enhancing a quality by design (QbD) of a medicine, the system comprising:
a server that generates content and data for training a trainee on the training method for enhancing the quality by design of the medicine, and performs evaluation and certification based on data provided from the trainee; and
a user terminal that receives data from the server through a network to provide the content and the data to the trainee, and transmits information entered by the trainee to the server,
wherein the server includes:
a competency verification module that verifies a competency of the trainee who intends to complete a quality by design (QbD) 6 sigma training;
a training module that provides training content at a plurality of levels and manages training with the competency of the trainee verified in the competency verification module;
a task module that submits a task according to the training content of the training module, and collects task performance results to perform evaluation; and
a certification module that performs the certification based on data collected by the task module.

2. The system for a training method for enhancing a quality of design of a medicine of claim 1, wherein the training module, the task module, and the certification module perform the training, the task evaluation, and the certification, respectively, by dividing levels into a green belt level, a black belt level, a master black belt level, and a big data master black belt based on a level of a user.

3. The system for a training method for enhancing a quality of design of a medicine of claim 1, wherein the training module includes a training application unit, a training attendance unit, a training progress unit, and a training result unit.

4. The system for a training method for enhancing a quality of design of a medicine of claim 1, wherein the task module includes a task registration unit, a task performance unit, and a task evaluation unit.

5. The system for a training method for enhancing a quality of design of a medicine of claim 4, wherein the task performance unit includes a task definition section, a task measurement section, a task analysis section, a task improvement section, and a task management section, and
the task evaluation unit includes a task definition evaluation section, a task measurement evaluation section, a task analysis evaluation section, a task improvement evaluation section, and a task management evaluation section.

6. The system for a training method for enhancing a quality of design of a medicine of claim 1, wherein the certification module includes an oral evaluation unit and a final evaluation unit.

7. The system for a training method for enhancing a quality of design of a medicine of claim 6, wherein the certification module suspends the certification when it is determined that an evaluation result of the final evaluation unit is equal to or less than a preset score.
